# EUROPEAN PATENT APPLICATION

(11) **EP 2 634 163 A1**
(43) Date of publication of application: **04.09.2013**
(21) Application number: 11836044.5
(22) Date of filing: 14.10.2011
(51) Int. Cl.: C04B 41/85, B01D 39/20, C04B 35/478, C09J 1/00, C09J 11/04, C09K 3/10, F01N 3/02

(54) **SEALING MATERIAL AND METHOD FOR MANUFACTURING CERAMIC HONEYCOMB FIRED BODY**

(30) Priority: 26.10.2010 JP 2010239604
(71) Applicant: Sumitomo Chemical Company Limited, Tokyo 104-8260 (JP)
(72) Inventor: UOE Kousuke, Niihama-shi Ehime 792-8521 (JP)
(74) Representative: Vossius & Partner
(86) International application number: PCT/JP2011/073700
(87) International publication number: WO 2012/056905

(57) **Abstract**

To provide a plugging material that is hardened at low temperature (e.g., 100 to 300°C), can obtain excellent adhesion to partition walls of a ceramic honeycomb sintered body, and can obtain excellent heat resistance. A plugging material comprising a water-based inorganic adhesive and aluminum titanate-based ceramic particles.

## Description

### Technical Field

The present invention relates to a plugging material and a method for manufacturing a ceramic honeycomb sintered body.

### Background Art

A honeycomb filter has been widely known as a filter for a DPF (Diesel particulate filter) or the like. The honeycomb filter has structure in which one end side of through-holes in a part of a honeycomb sintered body including a large number of through-holes (channels) is plugged by a plugging material and the other end side of the remaining through-holes is plugged by the plugging material. As the plugging material for forming such a honeycomb sintered body, a paste including an inorganic compound and an organic compound is known (see Patent Literature 1).

### Citation List

### Patent Literature

Patent Literature 1: WO2007/097000 pamphlet

### Summary of Invention

### Technical Problem

However, since the plugging material described in Patent Literature 1 includes the organic compound, when the plugging material is used for plugging of a ceramic honeycomb sintered body, operation for decomposing or removing the organic compound at high temperature after the plugging is necessary. Therefore, there is a problem in that steps for manufacturing the ceramic honeycomb sintered body increase and operation is complicated.

Therefore, it is an object of the present invention to provide a plugging material that is hardened at low temperature (e.g., 100 to 300°C), can obtain excellent adhesion to partition walls of a ceramic honeycomb sintered body, and can obtain excellent heat resistance and a method for manufacturing a ceramic honeycomb sintered body using the plugging material.

### Solution to Problem

In order to attain the object, the present invention provides a plugging material containing a water-based inorganic adhesive and aluminum titanate-based ceramic particles.

Since such a plugging material has the specific composition described above, the plugging material can be hardened at low temperature (e.g., 100 to 300°C), can obtain excellent adhesion to a partition walls of a ceramic honeycomb sintered body, and has heat resistance for maintaining the shape thereof at high temperature (e.g., 1200°C). Therefore, such a plugging material is extremely useful for plugging of the ceramic honeycomb sintered body. When a defect such as chipping or cracking, an insufficiently plugged place, and the like are present in the ceramic honeycomb sintered body, the plugging material can be used as a repairing agent for repairing the defective parts. In the present invention, the aluminum titanate-based ceramic particles imply aluminum magnesium titanate-based ceramic particles. One kind of the aluminum titanate-based ceramic particles may be independently used or two or more kinds of the aluminum titanate-based ceramic particles may be mixed and used.

In the plugging material of the present invention, it is preferable that the solid content mass ratio of the inorganic adhesive and the aluminum titanate-based ceramic particles is 99:1 to 25:75. Consequently, it is possible to further improve the hardenability at low temperature, the adhesion, and the heat resistance.

Further, in the plugging material according to the present invention, it is preferable that the inorganic adhesive includes a colloidal inorganic oxide, an inorganic polymer, refractory particles, and water. Consequently, it is possible to further improve the hardenability at low temperature, the adhesion, and the heat resistance.

The present invention provides a method for manufacturing a ceramic honeycomb sintered body including an extrusion molding step for extrusion-molding a raw material mixture to obtain an green honeycomb (unsintered (green) honeycomb) molded body including a plurality of channels divided by partition walls, a sintering step for sintering the green honeycomb molded body to obtain an unplugged honeycomb sintered body, a plugging step for plugging one ends of the channels in the unplugged honeycomb sintered body using the plugging material of the present invention to obtain a plugged honeycomb sintered body, and a heating step for heating the plugged honeycomb sintered body at 100 to 300°C to obtain a ceramic honeycomb sintered body.

With such a manufacturing method, it is possible to harden the plugging material at low temperature of 100 to 300°C, improve adhesion of the plugging material after the hardening and the partition walls of the ceramic honeycomb sintered body, and obtain excellent heat resistance of the plugging material after the hardening.

### Advantageous Effects of Invention

According to the present invention, it is possible to provide a plugging material that is hardened at low temperature (e.g., 100 to 300°C), can obtain excellent adhesion to partition walls of a ceramic honeycomb sintered body, and can obtain excellent heat resistance and a method for manufacturing a ceramic honeycomb sintered body using the plugging material.

### Brief Description of Drawings

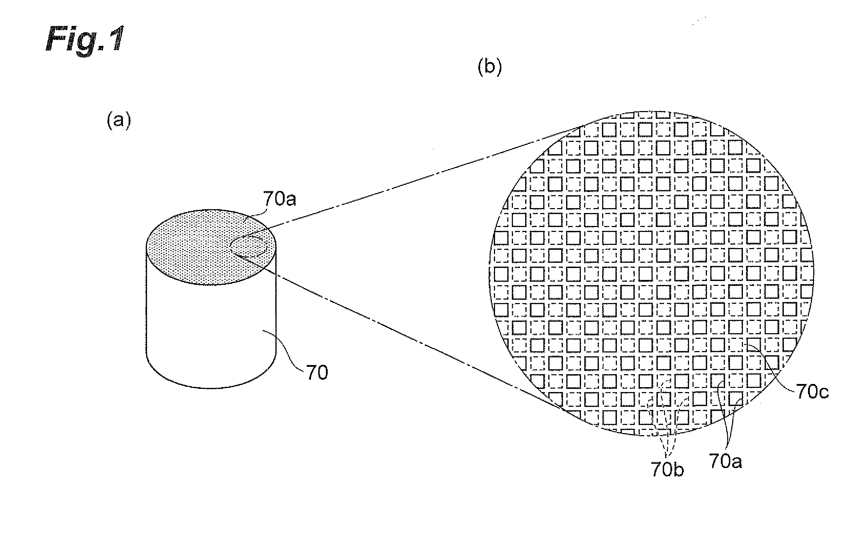

[Figure 1] Figure 1(a) is a perspective view showing an example of a ceramic honeycomb sintered body and Figure 1(b) is a partially enlarged view of Figure 1(a).

### Description of Embodiments

A preferred embodiment of the present invention is explained in detail below with reference to the drawings. In the following explanation, the same reference numerals and signs are used for the same or equivalent portions and redundant explanation of the portions is omitted.

### <Plugging material>

A plugging material in this embodiment contains a water-based inorganic adhesive and aluminum titanate-based ceramic particles (powder). The materials forming the plugging material are explained below.

The inorganic adhesive is the water-based inorganic adhesive. The water-based inorganic adhesive indicates an agent in which an inorganic compound having a thermosetting property is dispersed in a dispersion medium containing water as a main substance. The inorganic adhesive preferably includes at least one kind selected out of a colloidal inorganic oxide, an inorganic polymer, and refractory particles and water and more preferably includes the colloidal inorganic oxide, the inorganic polymer, the refractory particles, and the water. The inorganic adhesive may include inorganic fiber. Examples of the colloidal inorganic oxide include colloidal silica and colloidal alumina. Examples of the inorganic polymer include a polyphosphoric acid compound, a polyaluminic acid compound, and a polysiloxane compound. Examples of the refractory particles include alumina, quartz, feldspar, aluminum silicate, and mullite. Examples of the inorganic fiber include alumina fiber, silica fiber, and silica alumina fiber. The plugging material contains the inorganic adhesive including the components, whereby hardening at low temperature (e.g., 100 to 300°C) is further facilitated.

The content of the colloidal inorganic oxide in the inorganic adhesive is preferably 6 to 20 mass % on the basis of the total amount of the solid content of the inorganic adhesive. If the content is less than 6 mass %, bonding strength may decrease. If the content exceeds 20 mass %, although the bonding strength increases, the ratio of the refractory particles and the inorganic fiber in the inorganic adhesive decreases. Therefore, a crack may occur after hardening. The content of the refractory particles in the inorganic adhesive is preferably 30 to 90 mass % and more preferably 50 to 90 mass % on the basis of the total amount of the solid content of the inorganic adhesive. Since the contents of the colloidal inorganic oxide and the refractory particles are within the ranges, it is possible to further improve all of the hardenability at low temperature, the adhesion, and a reduction in volumetric shrinkage during hardening in balance.

The content of the inorganic polymer in the inorganic adhesive is preferably 0.1 to 10 mass % and more preferably 0.1 to 5 mass % on the basis of the total amount of the solid content of the inorganic adhesive. The content of the inorganic fiber in the inorganic adhesive is preferably 0 to 10 mass % and more preferably 0 to 5 mass % on the basis of the total amount of the solid content of the inorganic adhesive. Since the contents of the inorganic polymer and the inorganic fiber are within the ranges, it is possible to further improve all of the hardenability at low temperature, the adhesion, and the reduction in volumetric shrinkage during hardening in balance.

The content of the water in the inorganic adhesive is preferably adjusted such that the viscosity of the inorganic adhesive is within a desirable range explained below. Alternatively, the content of the water in the inorganic adhesive is preferably adjusted to be a desirable amount of the water in the entire plugging material explained below.

The viscosity of the inorganic adhesive is preferably 1000 to 80000 mPa·s and more preferably 5000 to 50000 mPa·s. If the viscosity is lower than 1000 mPa·s, the inorganic adhesive drips because of the gravity. If the viscosity exceeds 80000 mPa·s, the inorganic adhesive is not led into a narrow portion and a defect tends to occur.

As the water-based inorganic adhesive including the colloidal inorganic oxide, the inorganic polymer, the refractory particles, and the water, commercially available products such as SUMICERUM (registered trademark) S-10A, S-18D, and S-30A (manufactured by ASAHI CHEMICAL CO., LTD.) and Aron Ceramics D (manufactured by TOA GOSEI CO., LTD.) can be used.

The aluminum titanate-based ceramic particles in this embodiment imply aluminum magnesium titanate-based ceramic particles. Since the plugging material contains the ceramic particles, the heat resistance is improved, the volumetric shrinkage after hardening is small, and the adhesion to the partition walls of the ceramic honeycomb sintered body is improved.

When the aluminum magnesium titanate-based ceramic particles are used as the aluminum titanate-based ceramic particles, the content of magnesium in the aluminum magnesium titanate-based ceramic particles is preferably 0.03 to 0.15 and more preferably 0.03 to 0.12 in a molar ratio (a mol number of magnesium/a total mol number of aluminum and titanium) with respect to the total amount of aluminum and titanium. Usually, it is known that aluminum titanate-based crystal is decomposed into titanium, alumina, and the like at temperature of 1100 to 1200°C. Since magnesium is contained at the content in the range, it is possible to improve resistance to thermal decomposition.

In this embodiment, the aluminum titanate-based ceramic particles may include, in an X-ray diffraction spectrum, other crystal patterns of alumina, titania, and the like besides a crystal pattern of aluminum titanate (Al₂TiO₅) or aluminum magnesium titanate (Al₂₍₁₋ₓ₎MgₓTi₍₁₊ₓ₎O₅). The aluminum titanate-based ceramic particles may include elements other than titanium, aluminum, magnesium, and oxygen, for example, impurity elements or the like inevitably mixed from a raw material such as alkali metal elements such as sodium and potassium and silicon. The aluminum titanate-based ceramic particles imply ceramic particles having a dual phase of aluminum titanate or aluminum magnesium titanate and other inorganic substances as well. Examples of the other inorganic substances include alumina, titania, magnesia, alumino silicate glass, tridymite, cristobalite, spinel, cordierite, mullite, and feldspar.

The particle diameter of the ceramic particles is not specifically limited. However, a particle diameter (D50) equivalent to cumulative percentage 50% of a volume reference measured by a laser diffraction method is preferably 1 to 100 µm and more preferably 5 to 50 µm. If the particle diameter is smaller than 1 µm, the volumetric shrinkage after hardening of the plugging material tends to be large. If the particle diameter exceeds 100 µm, the aluminum titanate-based ceramic particles are likely to be separated and precipitated in the plugging material and the plugging material tends to be hard to handle.

In the plugging material, the solid content mass ratio (inorganic adhesive : aluminum titanate-based ceramic particles) of the inorganic adhesive and the aluminum titanate-based ceramic particles is preferably 99:1 to 25:75, more preferably 90:10 to 25:75, and still more preferably 57:43 to 27:73. If the inorganic adhesive is less than the ratio (the aluminum titanate-based ceramic particles are more than the ratio), the bonding strength decreases and the plugging material tends to be hard to harden. If the aluminum titanate-based ceramic particles are less than the ratio (the inorganic adhesive is more than the ratio), the coefficient of thermal expansion after hardening of the plugging material is higher than the coefficient of thermal expansion of the honeycomb sintered body and the resistance to thermal shock of the plugging material tends to decrease.

The plugging material is water-based and includes water as a solvent. The plugging material may be either alkaline, neutral, or acid. The content of the water in the plugging material is preferably 25 to 60 mass % and more preferably 30 to 55 mass % on the basis of the total amount of the plugging material. If the content of the water is less than 25 mass %, the plugging material tends to harden and to be hard to flow. If the content of the water exceeds 60 mass %, the plugging material tends to drip during hardening.

The plugging material may contain a material other than the materials described above if the effect of the present invention is not spoiled. It is preferred that the plugging material does not include an organic compound. However, an organic compound removed by heating at 100 to 300°C can be added as long as the effect of the present invention is not spoiled. Examples of the organic compound that can be added include water-soluble organic solvents including alcohols such as methanol, ethanol, and butanol and glycols such as propylene glycol and ethylene glycol.

Usually, the plugging material is paste or slurry. The plugging material can be prepared by uniformly mixing the materials described above.

<Method for manufacturing a ceramic honeycomb sintered body>
A method for manufacturing a ceramic honeycomb sintered body in this embodiment includes an extrusion molding step for extrusion-molding a raw material mixture to obtain an green honeycomb molded body including a plurality of channels divided by partition walls, a sintering step for sintering the green honeycomb molded body to obtain an unplugged honeycomb sintered body, a plugging step for plugging one end of the channel in the unplugged honeycomb sintered body using the plugging material of the present invention to obtain a plugged honeycomb sintered body, and a heating step for heating the plugged honeycomb sintered body at 100 to 300°C to obtain a ceramic honeycomb sintered body. The present invention includes a method for repairing, when a defect such as chipping or cracking, an insufficiently plugged place, and the like are present in the ceramic honeycomb sintered body, the defective parts with the plugging material in this embodiment.

Figure 1 is a diagram showing an example of a ceramic honeycomb sintered body manufactured by the manufacturing method in this embodiment. Figure 1(a) is a perspective view showing an example of the ceramic honeycomb sintered body. Figure 1(b) is a partially enlarged view of Figure 1(a). A ceramic honeycomb sintered body 70 shown in Figure 1 is, as shown in Figure 1(a), a columnar body in which a large number of channels 70a and 70b divided by partition walls 70c are arranged substantially in parallel. A sectional shape of the channels 70a and 70b is a square as shown in Figure 1(b). In the honeycomb sintered body 70, the plurality of channels 70a and 70b are arranged in a square configuration viewed from an end face, i.e., arranged such that center axes of the channels 70a and 70b are respectively located at vertexes of squares. In the honeycomb sintered body 70, one of openings at both ends of the channels 70a and 70b are plugged. At the end on the side shown in Figure 1(b) (the upper end in Figure 1(a)), the channels 70a are opened and the channels 70b are plugged. At the end on the opposite side of the end (the lower end in Figure 1(a)), the channels 70a are plugged and the channels 70b are opened. In the honeycomb sintered body 70, as shown in Figure 1(b), such channels 70a and 70b are alternately arranged. The size of the squares of the cross sections of the channels 70a and 70b can be set to, for example, 0.5 to 2.5 mm on one side.

When the honeycomb sintered body 70 is the columnar body shown in Figure 1, it is preferred that the dimensions of the honeycomb sintered body 70 are, for example, a diameter equal to or larger than about 100 mm, length equal to larger than about 100 mm, the wall thickness of the partition walls 70c equal to or smaller than about 0.5 mm. Note that the wall thickness of the partition walls 70c is preferably equal to or larger than about 0.2 mm. A cell structure in the honeycomb sintered body 70 is preferably equal to or larger than 100 CPSI (Cells Per Square Inch) as the total number of the channels 70a and 70b. The honeycomb sintered body 70 preferably has effective porosity of 30 to 60 volume %, an average pore diameter of 1 to 20 µm, and a pore diameter distribution (D₉₀-D₁₀)/D₅₀ smaller than 0.5. D₁₀, D₅₀, and D₉₀ are pore diameters when a cumulative pore capacity of the entire pore capacity accounts for 10%, 50%, and 90%, respectively.

The respective steps in the method for manufacturing a ceramic honeycomb sintered body in this embodiment are explained in detail below.

The extrusion molding step is a step for extrusion-molding a raw material mixture to obtain a green honeycomb molded body. The raw material mixture for forming a green honeycomb molded body is a material that becomes porous ceramics by being sintered later, and includes a ceramic raw material. The ceramic raw material is not specifically limited. Examples of the ceramic raw material include alumina, silica, mullite, cordierite, glass, an oxide such as aluminum titanate, silicon carbide, silicon nitride, and metal. Note that the aluminum titanate can further include magnesium and/or silicon.

The raw material mixture preferably includes an inorganic compound source powder, which is a ceramic raw material, an organic binder such as methyl cellulose, and an additive that is added according to necessity.

For example, when ceramics is aluminum titanate, the inorganic compound source powder includes aluminum source powder such as α alumina powder and titanium source powder such as titania powder of an anatase type or a rutile type and/or aluminum titanate powder and can further include, according to necessity, magnesium source powder such as magnesia powder or magnesia spinel powder and/or silicon source powder such as silicon oxide powder or glass flit. It is preferred that the ceramics is aluminum titanate because coefficients of thermal expansion of the partition walls of the ceramic honeycomb sintered body and the plugging material in this embodiment are close values when the ceramics is aluminum titanate.

Examples of the organic binder include celluloses such as methylcellulose, carboxy methylcellulose, hydroxylalkyl methylcellulose, and sodium carboxyl methylcellulose; alcohols such as polyvinyl alcohol; and lignosulfonate.

Examples of the additive include a pore-forming agent, a lubricant and a plasticizer, a dispersant, and a solvent.

Examples of the pore-forming agent include a carbon material such as graphite; resins such as polyethylene, polypropylene, and polymethylmethacrylate; plant materials such as starch, nut husk, walnut husk, and corn; ice; and dry ice.

Examples of the lubricant and the plasticizer include alcohols such as glycerin; higher fatty acid such as caprylic acid, lauric acid, palmitic acid, arachidic acid, oleic acid, and stearic acid; metal stearate such as aluminum stearate; and polyoxyalkylene alkyl ether.

Examples of the dispersant include inorganic acid such as nitric acid, hydrochloric acid, and sulfuric acid; organic acid such as oxalic acid, citric acid, acetic acid, malic acid, and lactic acid; alcohols such as methanol, ethanol, and propanol; and surfactants such as ammonium polycarbonate.

As the solvent, for example, alcohols such as methanol, ethanol, butanol, and propanol; glycols such as propylene glycol, polypropylene glycol, and ethylene glycol; and water can be used.

The raw material mixture can be prepared by mixing, with a kneading machine or the like, the inorganic compound source powder, the organic binder, the solvent, and an additive added according to necessity.

The green honeycomb molded body includes a plurality of channels divided by partition walls. The green honeycomb molded body can be obtained by extruding the above raw material mixture from an extruder including an outlet opening corresponding to the sectional shape of the partition walls of the green honeycomb molded body, drying according to necessity, and cutting at desired length.

The sintering step is a step for sintering the green honeycomb molded body to obtain an unplugged honeycomb sintered body. In the sintering step, the green honeycomb molded body is subject to calcination (degreasing) and sintered, whereby a honeycomb sintered body including a plurality of channels divided by partition walls made of porous ceramics can be obtained. The honeycomb sintered body obtained in the sintering step is an unplugged honeycomb sintered body in which the channels are not plugged at both ends and are through holes.

The calcination (degreasing) is a step for removing, through burn-out, decomposition, or the like, the organic binder in the green honeycomb molded body and an organic additive mixed according to necessity. Typically, the calcination is performed at a temperature rise stage (e.g., a temperature range of 150 to 900°C) to a sintering temperature. In the calcination (degreasing) step, it is preferred to suppress the rate of temperature rise to a minimum.

The sintering temperature in the sintering of the green honeycomb molded body is usually equal to or higher than 1300°C and preferably equal to or higher than 1400°C. The sintering temperature is usually equal to or lower than 1650°C and preferably equal to or lower than 1550°C. The rate of temperature rise up to the sintering temperature is not particularly limited, however, usually it is 1°C/hour to 500°C/hour.

The sintering is usually performed in the atmosphere. However, depending on a type and the used amount ratio of raw material powder to be used, the sintering may be performed in an inert gas such as a nitride gas or an argon gas or may be performed in a reducing gas such as a carbon monoxide gas or a hydrogen gas. Further, the sintering may be performed in an atmosphere in which partial water vapor pressure is reduced.

The sintering is usually performed using a normal sintering furnace such as a tubular electric furnace, a box type electric furnace, a tunnel furnace, a far infrared furnace, a microwave heating furnace, a shaft furnace, a reverberatory furnace, and a roller hearth furnace. The sintering may be performed by a batch type or may be performed by a continuous type. Further, the sintering may be performed by a still standing type or may be performed by a fluid type.

Time required for the sintering may be a time sufficient for generating ceramics. The time varies depending on an amount of the green honeycomb molded body, a system of a furnace, a sintering temperature, a sintering atmosphere, or the like. However, usually, the time is 10 minutes to 24 hours.

The plugging step is a step for plugging one ends of the channels in the unplugged honeycomb sintered body using the plugging material in this embodiment explained above to obtain a plugged honeycomb sintered body.

For example, as shown in Figure 1, the plugging is performed by filling the plugging material in the openings at one ends of the channels 70a and 70b. In this case, the plugging can be performed by, for example, abutting a mask having a plurality of through-holes provided in desired positions to one end face of the honeycomb sintered body and supplying the plugging material to the one end face to thereby fill the plugging material only at the ends of the channels 70a and filling the plugging material only at the ends of the channels 70b in the same manner on the other end face of the honeycomb sintered body Consequently, as shown in Figure 1, it is possible to obtain the plugged honeycomb sintered body in which the channels 70a, the openings at one ends of which are plugged, and the channels 70b, the openings of which on the opposite side of the channels 70a are plugged, are alternately arranged.

A method for supplying the plugging material to the channels 70a and 70b is not specifically limited. For example, the plugging material supplied onto the mask may be squeezed into the channels via the through-holes of the mask using a squeezee or may be pushed into the channels by a piston.

The heating step is a step for heating the plugged honeycomb sintered body at 100 to 300°C to obtain a ceramic honeycomb sintered body. In the heating step, the plugging material filled in the channels in the plugging step is hardened. The plugging material in the past needs to be heated, after the plugging, at temperature (e.g., 1250 to 1550°C) same as the temperature in the sintering step explained above. However, in the manufacturing method in this embodiment, it is possible to sufficiently harden the plugging material by heating at 100 to 300°C using the plugging material in this embodiment. In the manufacturing method in this embodiment, adhesion of the plugging material after hardening and the partition walls of the ceramic honeycomb sintered body is satisfactory.

In the heating step, a heating atmosphere is not specifically limited. However, the plugged honeycomb sintered body may be heated in an inert gas such as a nitrogen gas or an argon gas or may be heated in a reducing gas such as a carbon monoxide gas or a hydrogen gas. Further, the heating may be performed in the air atmosphere or an atmosphere in which partial water vapor pressure is reduced.

When a defect such as chipping or cracking, an insufficiently plugged place, and the like are present in the plugged or unplugged honeycomb sintered body, the defective parts can be repaired using the plugging material. In this case, the plugging material is filled in the defective parts, heated by a method same as the heating step, and hardened. Consequently, it is possible to obtain a honeycomb sintered body in which the defect such as chipping or defect, the insufficiently plugged place, and the like are repaired.

It is possible to obtain the target ceramic honeycomb sintered body 70 shown in Figure 1 through the steps explained above. It is also possible to process the obtained ceramic honeycomb sintered body into a desired shape through grinding or the like.

In the ceramic honeycomb sintered body 70 having the structure shown in Figure 1, the partition walls 70c are formed of the porous ceramics. The partition walls play a role of a filter. When fluid is supplied to the ceramic honeycomb sintered body 70 from the end on the side shown in Figure 1(b) (the upper end in Figure 1(a)), the fluid enters from the opened channels 70a and moves to the channels 70b through the porous partition walls 70c. The fluid is discharged from the openings of the channels 70b at the end on the opposite side of the side shown in Figure 1(b) (the lower end in Figure 1(a)).

The present invention is not limited to the embodiment and various modified forms are possible. For example, the shape of the ceramic honeycomb sintered body manufactured by the manufacturing method according to the present invention is not specifically limited. An arbitrary shape can be adopted according to a use. For example, the external shape of the ceramic honeycomb sintered body is not limited to the column and can be regular polygonal prisms such as a regular triangular prism, a regular square prism, a regular hexagonal prism, and a regular octagonal prism and prisms such as a triangular prism, a square prism, a hexagonal prism, and an octagonal prism other than the regular polygonal prisms. The circular shape of the column includes an elliptical shape. The sectional shape of the channels is not limited to the square and can be a rectangle, a circle, an ellipse, a triangle, a hexagon, and an octagon. Channels having different diameters and channels having different sectional shapes may be mixed in the channels. Further, the arrangement of the channels is not limited to the square arrangement and can be an equilateral-triangular configuration in which the centers of the channels are arranged at the vertexes of regular triangular shapes in a cross section, a zigzag configuration, and the like.

The ceramic honeycomb sintered body manufactured by the manufacturing method according to the present invention can be suitably applied to an exhaust gas filter for the clarification of exhaust gases from an internal combustion engine such as a diesel engine and a gasoline engine, a catalyst carrier, a filtration filter used for filtering of drinks such as beer, a selective permeation filter for selectively permeating gas components (e.g., carbon monoxide, carbon dioxide, nitrogen, and oxygen) occurring at the time of purification of oil.

### Examples

The present invention is more specifically explained below on the basis of examples. However, the present invention is not limited to the examples explained below.

### [Example 1]

### (Preparation of a plugging material)

75 mass % of SUMICERUM S-10A (commodity name, manufactured by ASAHI CHEMICAL CO., LTD., characteristics are shown in Table 1 below) as a water-based adhesive, and 25 mass % of powder (Al_{1.82}Mg_{0.12}Ti_{1.12}O_{6.09}-0.1SiO₂, average particle diameter D50: 23 µm) having a dual phase of aluminum magnesium titanate (Al_{1.76}Mg_{0.12}Ti_{1.12}O₅) and alumino silicate glass were mixed to prepare a plugging material. The powder having the dual phase of aluminum magnesium titanate and alumino silicate glass is equivalent to the aluminum titanate-based ceramic particles of the present invention. The solid content mass ratio at this point was S-10A : aluminum magnesium titanate-based ceramic powder = 55:45.

### (Preparation of a ceramic honeycomb sintered body)

To form a green honeycomb molded body, a raw material mixture including raw material powder of aluminum magnesium titanate (Al₂O₃, TiO₂, MgO), SiO₂, ceramic powder having a dual phase of aluminum magnesium titanate, alumina, and alumino silicate glass (a composition formula at the time of preparation: 41.4Al₂O₃-49.9TiO₂-5.4MgO-3.3SiO₂, numerical values in the formula represent molar ratios), an organic binder, a lubricant, a pore-forming agent, plasticizer, a dispersant, and water (a solvent) was prepared. Contents of the components in the raw material mixture were adjusted to values described below.
Al₂O₃:37.3 parts by mass.
TiO₂: 37.0 parts by mass.
MgO: 1.9 parts by mass.
SiO₂: 3.0 parts by mass.
Ceramic powder: 8.8 parts by mass.
Pore-forming agent: 12.0 parts by mass of starch having an average particle diameter of 25 µm obtained from a potato.
Organic binder: 5.5 parts by mass of methylcellulose (SM-4000, manufactured by SHIN-ETSU CHEMICAL CO., LTD.), 2.3 parts by mass of hydroxypropyl methylcellulose (60SH-4000, manufactured by SHIN-ETSU CHEMICAL CO., LTD.), 7.8 parts by mass in total.
Plasticizer: 0.4 parts by mass of glycerin DG (manufactured by NOF CORPORATION).
Dispersant: 4.6 parts by mass of UNILUBE (50MB-72, manufactured by NOF CORPORATION).
Water: 28.3 parts by mass.

The raw material mixture was kneaded and extrusion-molded, whereby a green (unsintered) molded body (a columnar body having a diameter of 160 mmφ) having a honeycomb shape including a plurality of channels divided by partition walls was manufactured. The green honeycomb molded body was cut at length of 250 mm and, after being dried by a microwave under normal pressure, heated to 600°C at a rate of temperature rise of 10°C/hour with oxygen concentration of the atmosphere set to 3 volume % or less. Thereafter, the green honeycomb molded body was sintered for five hours at 1450°C to obtain an aluminum titanate sintered body (an unsintered honeycomb sintered body). A sectional shape of channels (through-holes) of an obtained unplugged honeycomb sintered body was a square 1.2 mm on each side. The thickness of the partition walls was 0.28 mm.

One ends of the channels of the obtained unplugged honeycomb sintered body were plugged by the plugging material. The plugging was performed by abutting a mask having a plurality of through-holes provided in desired positions to one end face of the unplugged honeycomb sintered body, supplying the plugging material to the one end face, and squeezing the plugging material into the channels using the squeezee. Further, as shown in Figure 1, the plugging was performed such that the channels 70a, the openings at one ends of which were plugged, and the channels 70b, the openings of which on the opposite side of the channels 70a were plugged, were alternately arranged. Consequently, a plugged honeycomb sintered body was obtained.

Subsequently, the obtained plugged honeycomb sintered body was heated for one hour at 300°C in the air atmosphere, whereby the plugging material was hardened to obtain a target ceramic (aluminum magnesium titanate-based ceramic) honeycomb sintered body.

### [Example 2]

75 mass % of SUMICERUM S-18D (commodity name, manufactured by ASAHI CHEMICAL CO., LTD., characteristics are shown in Table 1 below) as a water-based adhesive, and 25 mass % of powder (Al_{1.82}Mg_{0.12}Ti_{1.12}O_{6.09}-0.1 SiO₂, average particle diameter D50: 23 µm) having a dual phase of aluminum magnesium titanate (Al_{1.76}Mg_{0.12}Ti_{1.12}O₅) and alumino silicate glass were mixed to prepare a plugging material. The solid content mass ratio at this point was S-18D : aluminum magnesium titanate-based ceramic powder = 57:43. A ceramic honeycomb sintered body was obtained in the same manner as Example 1 except that this plugging material was used.

### [Example 3]

75 mass % of SUMICERUM S-30A (commodity name, manufactured by ASAHI CHEMICAL CO., LTD., characteristics are shown in Table 1 below) as a water-based adhesive, and 25 mass % of powder (Al_{1.82}Mg_{0.12}Ti_{1.12}O_{6.09}-0.1 SiO₂, average particle diameter D50: 23 µm) having a dual phase of aluminum magnesium titanate (Al_{1.76}Mg_{0.12}Ti_{1.12}O₅) and alumino silicate glass were mixed to prepare a plugging material. The solid content mass ratio at this point was S-30A : aluminum magnesium titanate-based ceramic powder = 53:47. A ceramic honeycomb sintered body was obtained in the same manner as Example 1 except that this plugging material was used.

### [Example 4]

75 mass % of SUMICERUM S-208A (commodity name, manufactured by ASAHI CHEMICAL CO., LTD., characteristics are shown in Table 1 below) as a water-based adhesive, and 25 mass % of powder (Al_{1.82}Mg_{0.12}Ti_{1.12}O_{6.09}-0.1SiO₂, average particle diameter D50: 23 µm) having a dual phase of aluminum magnesium titanate (Al_{1.76}Mg_{0.12}Ti_{1.12}O₅) and alumino silicate glass were mixed to prepare a plugging material. The solid content mass ratio at this point was S-208A : aluminum magnesium titanate-based ceramic powder = 57:43. A ceramic honeycomb sintered body was obtained in the same manner as Example 1 except that this plugging material was used.

### [Example 5]

50 mass % of SUMICERUM S-30A (commodity name, manufactured by ASAHI CHEMICAL CO., LTD., characteristics are shown in Table 1 below) as a water-based adhesive, and 50 mass % of powder (Al_{1.82}Mg_{0.12}Ti_{1.12}O_{6.09}-0.1SiO₂, average particle diameter D50: 23 µm) having a dual phase of aluminum magnesium titanate (Al_{1.76}Mg_{o0.12}Ti_{1.12}O₅) and alumino silicate glass were mixed to prepare a plugging material. The solid content mass ratio at this point was S-30A : aluminum magnesium titanate-based ceramic powder = 27:73. A ceramic honeycomb sintered body was obtained in the same manner as Example 1 except that this plugging material was used.

### [Example 6]

50 mass % of SUMICERUM S-208A (commodity name, manufactured by ASAHI CHEMICAL CO., LTD., characteristics are shown in Table 1 below) as a water-based adhesive, and 50 mass % of powder (Al_{1.82}Mg_{0.12}Ti_{1.12}O_{6.09}-0.SiO₂, average particle diameter D50: 23 µm) having a dual phase of aluminum magnesium titanate (Al_{1.76}Mg_{0.12}Ti_{1.12}O₅) and alumino silicate glass were mixed to prepare a plugging material. The solid content mass ratio at this point was S-208A : aluminum magnesium titanate-based ceramic powder =31:69. A ceramic honeycomb sintered body was obtained in the same manner as Example 1 except that this plugging material was used.

### [Comparative Example 1]

A ceramic honeycomb sintered body was obtained in the same manner as Example 1 except that SUMICERUM S-18D (commodity name, manufactured by ASAHI CHEMICAL CO., LTD., characteristics are shown in Table 1 below), which is a water-based inorganic adhesive, was used alone as a plugging material.

### [Comparative Example 2]

A ceramic honeycomb sintered body was obtained in the same manner as Example 1 except that SUMICERUM S-30A (commodity name, manufactured by ASAHI CHEMICAL CO., LTD., characteristics are shown in Table 1 below), which is a water-based inorganic adhesive, was used alone as a plugging material.

### [Comparative Example 3]

A ceramic honeycomb sintered body was obtained in the same manner as Example 1 except that SUMICERUM S-208A (commodity name, manufactured by ASAHI CHEMICAL CO., LTD., characteristics are shown in Table 1 below), which is a water-based inorganic adhesive, was used alone as a plugging material.

### <Evaluation of adhesion>

States of plugging were observed and adhesion was evaluated concerning the ceramic honeycomb sintered bodies obtained in the examples and the comparative examples. The adhesion was evaluated as "fine" when no gap was present between the plugging material after hardening and the partition walls of the honeycomb sintered body and adhesion of the plugging material and the partition walls was fine and evaluated as "failure" when a gap is present between the plugging material after hardening and the partition walls of the honeycomb sintered body. The result is shown in Table 2.

### <Evaluation of heat resistance>

The ceramic honeycomb sintered bodies obtained in the above examples and the comparative examples were heated for one hour at 1200°C in the air atmosphere, whereby heat resistance of the hardened plugging materials was evaluated. The heat resistance was evaluated by checking, after a heat resistance test under the above heating conditions, presence or absence of melting of the plugging material, adhesion of the plugging material and the partition walls, and presence or absence of breakage of the partition walls due to expansion of the plugging material. The result is shown in Table 2.

**[Table 1]**

| | Physical properties | | | Characteristics after hardening | | |
|---|---|---|---|---|---|---|
| | Liquid property | Main components | Viscosity (mPa·s) | Heat resistant temperature (Max. °C) | Coefficient of thermal expansion (x10⁻⁷°C) | Bonding strength (kg/cm²) |
| S-10A | Slightly alkaline | Silica, alumina | 50000 | 1600 | 40 | 15 |
| S-30A | Slightly alkaline | Silica, alumina | 18000 | 1200 | 40 | 15 |
| S-18D | Alkaline | Silica, alumina | 45000 | 1200 | 80 | 100 |
| S-208A | Acid | Silica, alumina | 4500 | 1600 | 50 | 100 |

**[Table 2]**

| | | Example 1 | Example 2 | Example 3 | Example 4 | Example 5 | Example 6 | Comparative example 1 | Comparative example 2 | Comparative example 3 |
|---|---|---|---|---|---|---|---|---|---|---|
| Inorganic adhesive (a) | | S-10A | S-18D | S-30A | S-208A | S-30A | S-208A | S-18D | S-30A | S-208A |
| Ceramic powder (b) | | Aluminum magnesium titanate compound powder | | | | | | - | | |
| Mass ratio a:b | | 75:25 | 75:25 | 75:25 | 75:25 | 50:50 | 50:50 | 100:0 | 100:0 | 100:0 |
| Solid content mass ratio a:b | | 55:45 | 57:43 | 53:47 | 57:43 | 27:73 | 31:69 | 100:0 | 100:0 | 100:0 |
| Adhesion after hardening | | Fine | Fine | Fine | Fine | Fine | Fine | Fine | Fine | Fine |
| After heat resistance test | Melting of the sealing material | No | No | No | No | No | No | No | Yes | Yes |
| | Adhesion to the partition walls | Fine | Fine | Fine | Fine | Fine | Fine | Failure | Fine | Fine |
| | Partition wall breakage due to expansion | No | No | No | No | No | No | Yes | No | Yes |

### Industrial Applicability

As explained above, according to the present invention, it is possible to provide a plugging material that is hardened at low temperature (e.g., 100 to 300°C), can obtain excellent adhesion to partition walls of a ceramic honeycomb sintered body, and can obtain excellent heat resistance and a method for manufacturing a ceramic honeycomb sintered body using the plugging material.

### Reference Signs List

70 ... ceramic honeycomb sintered body, 70a, 70b ... channels, 70c ... partition walls.

## Claims

1. A plugging material comprising a water-based inorganic adhesive and aluminum titanate-based ceramic particles.

2. The plugging material according to claim 1, wherein the solid content mass ratio of the inorganic adhesive and the aluminum titanate-based ceramic particles is 99:1 to 25:75.

3. The plugging material according to claim 1 or 2, wherein the inorganic adhesive includes a colloidal inorganic oxide, an inorganic polymer, refractory particles, and water.

4. A method for manufacturing a ceramic honeycomb sintered body comprising:
an extrusion molding step for extrusion-molding a raw material mixture to obtain an green honeycomb molded body including a plurality of channels divided by partition walls;
a sintering step for sintering the green honeycomb molded body to obtain an unplugged honeycomb sintered body;
a plugging step for plugging one ends of the channels in the unplugged honeycomb sintered body using the plugging material according to any one of claims 1 to 3 to obtain a plugged honeycomb sintered body; and
a heating step for heating the plugged honeycomb sintered body at 100 to 300°C to obtain a ceramic honeycomb sintered body.
